# EUROPEAN PATENT APPLICATION

(11) **EP 0 964 040 A2**
(43) Date of publication of application: **15.12.1999**
(21) Application number: 99201602.2
(22) Date of filing: 21.05.1999
(51) Int. Cl.: C09D 201/00, C09D 5/02

(54) **Wall finishing product**

(30) Priority: 09.06.1998 BE 9800437
(71) Applicant: Verrijkt, Julien, 2100 Deurne (BE)
(72) Inventor: Verrijkt, Julien, 2100 Deurne (BE)
(74) Representative: Debrabandere, René

(57) **Abstract**

Wall finishing product, in particular for finishing plastered walls and ceilings and walls and ceilings made of plasterboard, characterised in that it is a mixture of at least one finishing filler, a polymer emulsion and a dye for obtaining the required colour.

## Description

The present invention concerns a wall finishing product, in particular for finishing plastered walls and ceilings and walls and ceilings made of plasterboard.

When plastering walls and ceilings, a layer of plaster is put on the wall or ceiling and levelled with a straightedge, after which it is smoothed out with a smoothing trowel, subsequently treated with a sponge and finally smoothed out again with a smoothing trowel so as to obtain a smooth surface which is fit to be painted.

In case of plasterboard plates, the joints and screw or rivet holes have to be filled up first with a filler and smoothed with a finishing product or what is called a finisher. Before the plates can be painted, they have to be pointed.

In both cases, a lot of effort is required to obtain a finished, painted wall.

In order to obtain a coloured finish, dye can be added to the plaster, so that it is body-coloured. This has to be done on the spot, since the plaster hardens relatively quickly, which represents an extra manipulation on top of the above-mentioned manipulations. Moreover, when a second quantity is made, it is difficult to obtain exactly the same colour, so that the finish may represent small colour differences.

Structural paints are available, i.e. paints with a granulated or fibrous filler which require a less good finishing of the substrate. The structural paint is usually applied after a single first coat, with a layer thickness which coincides with the size of the granules or fibres, after which the required structure is given to the layer by means of a spatula or roller.

Also this method is time-consuming. Moreover, the nature of the material itself does not allow for a smooth finish.

The invention aims a wall finishing product which does not have the above-mentioned disadvantages and which can be very easily processed and which allows for a smooth finish in a quick and simple manner, both in white or in other colours, of a substrate which only has to be semi-finished.

This aim is reached according to the invention in that the wall finishing product is a mixture of at least one finishing filler, a polymer emulsion and a dye for obtaining the required colour.

This product can be marketed as a spreadable paste which is ready for use.

The polymer emulsion is preferably a synthetic latex emulsion such as polyvinyl acetate or polystyrene butadiene, i.e. the basic component of latex paints, and thus it can be mixed with the finishing filler, together with the dye, in the shape of latex paint.

Preferably, the finishing filler, also called the 'finisher', apart from water and pulverised fillers such as one or several of the following materials: dolomite, limestone, pulverised marble, talc and mica, also contains a binding agent, in particular a polymer such as for example polyvinyl acetate and/or ethylene vinyl acetate.

The mixture may also contain an extra amount of binding agent or adhesive, in particular a synthetic emulsion, for example a polyvinyl acetate emulsion or a butadiene styrene emulsion.

In order to better explain the characteristics of the invention, the following preferred embodiments of a wall finishing product according to the invention are described as an example only without being limitative in any way.

The wall finishing product according to the invention is a mixture of mainly a finishing filler as a basic material, a latex paint for among others the colour and preferably also an adhesive or binding agent so as to obtain a good bond on the substrate, in particular a plastered wall or ceiling.

The finishing filler or 'finisher' is made on the basis of a filler, a binding agent and water, whereby the filler is made of one or several of the following materials: pulverised dolomite, pulverised marble, pulverised limestone, talc and mica, and whereby the binding agent is a polymer on the basis of vinyl, for example a vinyl acetate and/or an ethylene vinyl acetate polymer.

A suitable filler consists of a mixture of 22 vol.% of water, 44 vol.% of dolomite or limestone, 6 vol.% of talc, 6 vol.% of mica and 22 vol.% of vinyl acetate polymer or ethylene vinyl acetate polymer.

The latex paint is a conventional latex paint, available on the market, on the basis of synthetic latex, i.e. synthetically made, highly-molecular materials such as polyvinyl acetate or styrene butadiene copolymer.

This latex paint may be white or have any colour whatsoever.

The adhesive is a synthetic emulsion such as a styrene butadiene emulsion or a polyvinyl acetate emulsion. A very suitable adhesive is the product which is marketed by the Belgian company 'P.T.B., Polytechnisch Bedrijf' as an additive for concrete and mortars under the name 'compaktuna'.

The components are mixed in the wall finishing product in a proportion of 0.8 to 3.5 volume parts of finishing filler for 1 volume part of latex paint, with 0 to 10 vol.% and preferably about 5 vol.% of adhesive added to it.

The whole is well mixed and marketed ready for use in sealed recipients.

The finishing product may be applied in two layers with a thickness of for example up to 1 mm, whereby, when calculating in volumes, the first layer contains 2 to 3.5 times more filler than latex paint, whereas the second layer contains 0.8 to 1 times more filler than latex paint.

The storage time of the obtained product is identical to that of filler, namely 9 to 12 months.

This wall finishing product can be easily smoothed out and can be used for smoothly finishing semi-finished plastered walls or semi-finished walls made of plasterboard while simultaneously giving them the required colour.

This process is significantly faster than finishing off the wall entirely in the conventional manner and painting it afterwards.

The product is ready for use and must not even be stirred on the spot. Just as with paints, the product is available in standard colours which are invariable, so that two different recipients containing the same colour also render exactly the same colour.

Also other materials such as fillers, materials which influence the drying process, fungicidal materials, etc. can be added to the above-described wall finishing product.

The invention is by no means limited to the above-described embodiments; on the contrary, such a wall finishing product can be made in all sorts of variants while still remaining within the scope of the invention.

## Claims

1. Wall finishing product, in particular for finishing plastered walls and ceilings and walls and ceilings made of plasterboard, characterised in that it is a mixture of at least one finishing filler, a polymer emulsion and a dye for obtaining the required colour.

2. Wall finishing product according to claim 1, characterised in that it has the shape of a spreadable paste which is ready for use.

3. Wall finishing product according to claim 1 or 2, characterised in that the polymer emulsion is a synthetic latex emulsion, in particular polyvinyl acetate or polystyrene butadiene.

4. Wall finishing product according to claim 3, characterised in that the polymer emulsion and the dye are mixed together, in the shape of latex paint, with the finishing filler.

5. Wall finishing product according to claim 4, characterised in that it contains 0.8 to 3.5 volume parts of finishing filler for 1 part of latex paint.

6. Wall finishing product according to claim 5, characterised in that it contains 2 to 3.5 volume parts of finishing filler for 1 part of latex paint.

7. Wall finishing product according to claim 5, characterised in that it contains 0.8 to 1 volume part of finishing filler for 1 part of latex paint.

8. Wall finishing product according to any of the preceding claims, characterised in that the finishing filler or 'finisher' contains water, pulverised fillers and a binding agent.

9. Wall finishing product according to claim 8, characterised in that the binding agent contains a polymer such as for example polyvinyl acetate and/or ethylene vinyl acetate.

10. Wall finishing product according to claim 8 or 9, characterised in that the finishing filler, as a filler, contains one or several of the following materials: dolomite, limestone, pulverised marble, talc and mica.

11. Wall finishing product according to any of the preceding claims, characterised in that the mixture contains an extra amount of binding agent or adhesive.

12. Wall finishing product according to claim 11, characterised in that the extra amount of binding agent is a synthetic emulsion and in particular a polyvinyl acetate emulsion or a butadiene styrene emulsion.

13. Wall finishing product according to claim 11, characterised in that the synthetic emulsion of the extra amount of binding agent is the product which is marketed by the Belgian company ' P.T.B., Polytechnisch Bedrijf' as an additive for concrete and mortars under the name ' compaktuna)'.

14. Wall finishing product according to any of claims 11 to 13, characterised in that it contains 0 to 10 vol.% and preferably about 5 vol.% of extra binding agent or adhesive.
